# EUROPÄISCHE PATENTSCHRIFT

(11) **EP 1 255 379 B1**
(45) Veröffentlichungstag und Bekanntmachung des Hinweises auf die Patenterteilung: **23.01.2008**
(21) Anmeldenummer: 01110856.0
(22) Anmeldetag: 04.05.2001
(51) Int. Cl.: H04L 12/56

(54) **Verfahren zur Flusskontrolle bei mehreren Sendern mit unbekannter und/oder verschiedener Sendeleistung**
Method of flow control with a plurality of transmitters having unknowned and/or various output rates
Procédé de contrôle de flux avec émetteurs multiples à débits d'émission inconnus et/ou différents

(43) Veröffentlichungstag der Anmeldung: 06.11.2002
(73) Patentinhaber: Nokia Siemens Networks GmbH & Co. KG, 81541 München (DE)
(72) Erfinder: Müller, Erasmus, 80809 München (DE); Ross, Christopher, Dr., 81675 München (DE); Tuexen, Michael, Dr., 81479 München (DE)

(56) Entgegenhaltungen:
- EP-A- 0 374 928
- US-A- 6 141 324

## Beschreibung

Es wird ein Knoten in einem Kommunikationsnetz betrachtet, an dem bidirektionale Nachrichtenkanäle zum Versenden und Empfangen von Nachrichten angeschlossen sind. Auf der anderen Seite dieser Nachrichtenkanäle sind Verkehrsquellen und Verkehrssenken angeschlossen. Die Sendeleistung der Verkehrsquellen ist unbekannt, nicht alle Verkehrsquellen sind immer aktiv. An einem Knoten können mehrere Nachrichtenkanäle angeschlossen sein. Zur gesicherten Nachrichtenübertragung kommt ein Protokoll zum Einsatz, welches einen Fenstermechanismus zur Regulierung der Anzahl der Nachrichten, die eine Verkehrsquelle unquittiert verschicken darf, aufweist.

In einem solchen Knoten kann eine Empfangsüberlast eintreten, wenn das Nachrichtenangebot der Nachrichtenkanäle die Kapazität der Empfangseinrichtung des Knotens übersteigt. In diesem Fall werden Nachrichten verworfen.

Ein Problem besteht darin, ein geeignetes Verfahren zur Flußkontrolle zu finden, durch das der Knoten vor Überlast geschützt wird. Folgende Teilprobleme müssen von dieser Flußkontrolle zuverlässig bewältigt werden:
- Wenige Nachrichtenkanäle haben ein hohes Nachrichtenaufkommen, wodurch eine Überlastsituation entsteht.
- Viele Nachrichtenkanäle haben ein niedriges Nachrichtenaufkommen, insgesamt wird eine Überlastsituation erzeugt.
- Für die Flußkontrolle soll keine Rechenleistung aufgewendet werden, wenn ein Nachrichtenkanal inaktiv ist; es soll wenig Rechenleistung aufgewendet werden, wenn ein Nachrichtenkanal ein niedriges Nachrichtenaufkommen aufweist.

Eine bekannte Lösung dieses Problems besteht darin, Beschaltungsrichtlinien festzulegen, welche die Anzahl der an einen Knoten anzuschließenden Nachrichtenkanäle beschränken. Dies führt dazu, daß viel Kapazität vorgehalten wird, um selten auftretende Überlastfälle zu behandeln.

Eine weiteres bekanntes Verfahren löst das Problem in zwei Schritten. In einem ersten Schritt wird die Fenstergröße auf eine geschätzte bewältigbare Last herabgesetzt, in einem zweiten Schritt erfolgt in Abhängigkeit der Überlastindikation eine Feinregulierung. Dies ist nur bei wenigen Nachrichtenkanälen mit bekannter, konstant hoher Sendeleistung sinnvoll anwendbar; diese Lösung ist insbesondere nicht in der Lage, ohne Rechenleistung inaktive Nachrichtenkanäle zu behandeln.

In der US-Patentschrift US 5,751,969 wird eine Vorrichtung und ein Verfahren zur Vorhersage und zur Behandlung von Überlast in einem Netzwerk vorgestellt. Dabei wird bei einem drohenden oder eingetretenen Überlastzustand ein Überlast-Bit gesetzt. In Abhängigkeit eines gesetzten Überlast-Bits wird die Fenstergröße angepasst.

Die US-Patentschrift US 6,141,324 schlägt ein System und ein Verfahren für eine Kommunikation mit geringer Verzögerung vor. Das dort beschriebene Verfahren umfasst eine Überwachung der Differenz von Sequenznummern aufeinanderfolgender Nachrichten. Eine Anpassung der Fenstergröße erfolgt bei der in US 6,141,324 vorgestellten Lösung jedoch nicht.

Die der vorliegenden Erfindung zugrundeliegende Aufgabe besteht darin, die Nachteile der bisher bekannten Verfahren zur Flußkontrolle bei mehreren Sendern mit unbekannter und/oder verschiedener Sendeleistung zu vermeiden.

Die Aufgabe wird ausgehend von den Verfahren zur Flußkontrolle bei mehreren Sendern mit unbekannter und/oder verschiedener Sendeleistung gemäß den Merkmalen des Oberbegriffs des Patentanspruchs 1 durch dessen kennzeichnende Merkmale gelöst.

Ein wesentlicher Aspekt des erfindungsgemäßen Verfahrens ist die Tatsache, daß die Regelung nach einer Anzahl empfangener Nachrichten und nicht in festen Zeitabständen einsetzt. Dies hat den Vorteil, daß für inaktive Nachrichtenkanäle, d.h. Nachrichtenkanäle, auf denen keine Nachrichten empfangen werden, keine Messungen durchgeführt werden und damit keine Rechenkapazität für inaktive Nachrichtenkanäle gebunden wird. Darüber hinaus erfolgt eine Regelung für Nachrichtenkanäle, die ihr Fenster stets ausschöpfen, häufiger als für Nachrichtenkanäle, deren Sendeleistung geringer ist als das ihnen zu-geteilte Fenster. Dadurch wird einerseits im Betrieb ohne Überlast die Fenstergröße der Nachrichtenkanäle, die ihr Fenster stets ausschöpfen, ständig weiter erhöht, um deren Sendeleistung Rechnung zu tragen. Andererseits werden diese Nachrichtenkanäle im Überlastfall ebenfalls häufiger geregelt, so daß der Knoten effektiver vor Überlast geschützt wird.

Gemäß einer vorteilhaften Ausgestaltung wird das vorgestellte Verfahren mit einem Verfahren zum Kapazitätsadäquaten Setzen der Fenstergröße bei I/O Überlast gekoppelt. Dies bewirkt, daß im Überlastfall eine Einstellung der Fenstergröße auf einen optimalen Wert in einem Schritt erfolgen kann, im Betrieb ohne Überlast hingegen die Fenstergröße für Nachrichtenkanäle, deren Fenster ausgeschöpft ist, vergrößert werden kann.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

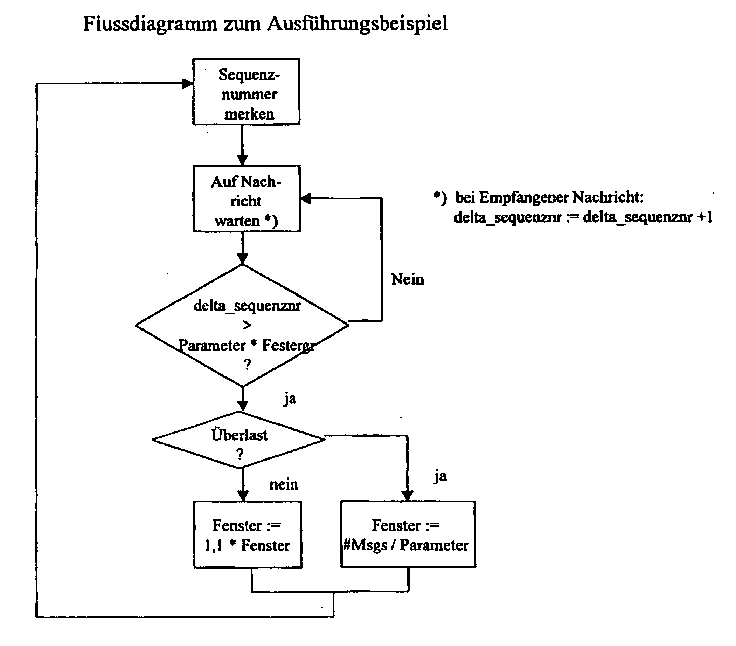

Die Figur zeigt ein Ablaufschema eines erfindungsgemäßen Verfahrens. Als Ausführungsbeispiel wird ein Knoten in einem Kommunikationsnetz betrachtet, an den Nachrichtenkanäle angeschlossen sind, auf denen SSCOP (Service Specific Connection Oriented Protocol) mit SSCF UNI (Service Specific Coordination Function for the User-Network Interface) als gesichertes Übertragungsprotokoll verwendet wird. Das Fenster, das der Verkehrsquelle vom Empfänger eingeräumt wird, wird in einer STAT Nachricht (status message) oder einer USTAT Nachricht (unsolicited status message) zusammen mit weiteren Statusinformationen an die Verkehrsquelle übertragen. Pro Nachrichtenkanal werden Statusvariablen geführt. In einer alternativen Fassung wird die Variable VR(H) verwendet, die den Wert der höchsten Sequenznummer der - nicht in Reihenfolge - empfangenen Nachrichten zugewiesen bekommt. Die Größe ΔVR(H) wird als die Veränderung von VR(H) seit der letzten Messung eingeführt.

Erreicht ΔVR(H) während einer Überlastsituation die aktuelle Fenstergröße, wird das Fenster auf einen verringerten Wert gesetzt. Die neue Fenstergröße entspricht der Anzahl der während der Messung tatsächlich empfangenen Nachrichten. Die neue Fenstergröße ist kleiner als die bisherige, da in einer Überlastsituation Nachrichten verworfen werden, d.h. ΔVR(H) ist größer als die Zahl der seit Beginn der Messung empfangenen Nachrichten.

Liegt keine Überlast vor, wird das Fenster in Schritten um jeweils 10 Prozent vergrößert.

Zwangsläufig ergibt sich, daß für inaktive Nachrichtenkanäle keine Messungen durchgeführt werden.

## Patentansprüche

1. Verfahren zur Flußkontrolle bei mehreren Sendern mit unbekannter und/oder verschiedener Sendeleistung, das in der Empfangseinrichtung eines Kommunikationssystems abläuft, demgemäß ein Fenstermechanismus zur Beeinflussung der Anzahl der Nachrichten, die eine Nachrichtenquelle unquittiert verschicken darf, verwendet wird, wobei
- in der Empfangseinrichtung die Zahl der je Nachrichtenkanal empfangenen Nachrichten ermittelt wird,
- eine Fenstergröße pro Nachrichtenkanal bestimmt wird, sobald die Zahl der je Nachrichtenkanal empfangenen Nachrichten einen bestimmten Wert überschreitet,
**dadurch gekennzeichnet, daß**, für jeden Nachrichtenkanal,
- zu Beginn eines Regelzyklus die Sequenznummer der nächstfolgenden Nachricht gespeichert wird,
- die Sequenznummern der folgenden Nachrichten überwacht werden,
- die Differenz aus der aktuellen Sequenznummer und der zu Beginn des Regelzyklus gespeicherten Sequenznummer mit der Fenstergröße verglichen werden, und
- eine neue Fenstergröße gesetzt wird, falls die Differenz aus der aktuellen Sequenznummer und der zu Beginn des Regelzyklus gespeicherten Sequenznummer die aktuelle Fenstergröße multipliziert mit einem Parameter erreicht oder übersteigt.

2. Verfahren nach Anspruch 1, **dadurch gekennzeichnet,**
**daß** der Parameter aufgrund äußerer Einflüsse, die nicht direkt mit der aktuellen Fenstergröße zusammenhängen, gewählt wird.

3. Verfahren nach Anspruch 1, **dadurch gekennzeichnet, daß,** für jeden Nachrichtenkanal,
- eine Überlasterkennung erfolgt,
- bei Überlast die neue Fenstergröße mit einem geeigneten Verfahren kleiner als die aktuelle Fenstergröße gewählt wird,
- falls keine Überlast vorliegt, die neue Fenstergröße mit einem geeigneten Verfahren größer als die aktuelle Fenstergröße gewählt wird.

4. Verfahren nach Anspruch 3, **dadurch gekennzeichnet, daß**, für jeden Nachrichtenkanal,
- zur Verkleinerung des Fensters die neue Fenstergröße aus der Anzahl der im Überlastfall von der einer Empfangskomponente zu einer vorverarbeitenden Komponente weitergeleiteten Nachrichten bestimmt wird,
- die Vergrößerung des Fensters durch Vergrößerung des aktuellen Fensters um einen bestimmten Prozentsatz erfolgt.

5. Verfahren nach einem der Ansprüche 1 bis 4, **dadurch gekennzeichnet, daß** die Regelzyklen zu zufällig ausgewählten Zeiten gestartet werden.

6. Anordnung zur Flußkontrolle bei mehreren Sendern mit unbekannter und/oder verschiedener Sendeleistung, die Teil der Empfangseinrichtung eines Kommunikationssystems ist, die einen Fenstermechanismus zur Beeinflussung der Anzahl der Nachrichten, die eine Nachrichtenquelle unquittiert verschicken darf, verwendet, wobei die Empfangseinrichtung dazu eingerichtet ist,
- die Zahl der je Nachrichtenkanal empfangenen Nachrichten zu ermitteln,
- pro Nachrichtenkanal eine Fenstergröße zu bestimmen, sobald die Zahl der je Nachrichtenkanal empfangenen Nachrichten einen bestimmten Wert überschreitet,
**dadurch gekennzeichnet, daß** die Anordnung dazu eingerichtet ist, für jeden Nachrichtenkanal,
- zu Beginn eines Regelzyklus die Sequenznummer der nächstfolgenden Nachricht zu speichern
- die Sequenznummern der folgenden Nachrichten zu überwachen,
- die Differenz aus der aktuellen Sequenznummer und der zu Beginn des Regelzyklus gespeicherten Sequenznummer mit der Fenstergröße zu vergleichen, und
- eine neue Fenstergröße, falls die Differenz aus der aktuellen Sequenznummer und der zu Beginn des Regelzyklus gespeicherten Sequenznummer die aktuelle Fenstergröße multipliziert mit einem Parameter erreicht oder übersteigt.

7. Anordnung nach Anspruch 6, **dadurch gekennzeichnet, daß** die Anordnung dazu eingerichtet ist, den Parameter aufgrund äußerer Einflüsse, die nicht direkt mit der aktuellen Fenstergröße zusammenhängen, zu wählen.

8. Anordnung nach Anspruch 6, **dadurch gekennzeichnet, daß** die Anordnung dazu eingerichtet ist, für jeden Nachrichtenkanal,
- gespeicherten Sequenznummer eine Überlasterkennung durchzuführen,
- bei Überlast die neue Fenstergröße mit einem geeigneten Verfahren kleiner als die aktuelle Fenstergröße zu wählen,
- falls keine Überlast vorliegt, die neue Fenstergröße mit einem geeigneten Verfahren größer als die aktuelle Fenstergröße zu wählen.

9. Anordnung nach Anspruch 8, **dadurch gekennzeichnet, daß** die Anordnung dazu eingerichtet ist, für jeden Nachrichtenkanal,
- zur Verkleinerung des Fensters die neue Fenstergröße aus der Anzahl der im Überlastfall von der einer Empfangskomponente zu einer vorverarbeitenden Komponente weitergeleiteten Nachrichten zu bestimmen,
- die Vergrößerung des Fensters durch Vergrößerung des aktuellen Fensters um einen bestimmten Prozentsatz vorzunehmen.

10. Anordnung nach einem der Ansprüche 6 bis 9, **dadurch gekennzeichnet, daß** die Anordnung dazu eingerichtet ist, die Regelzyklen zu zufällig ausgewählten Zeiten zu starten.

## Claims

1. Method for flow control for a plurality of transmitters having unknown and/or different transmission power, the method being carried out in the receiving device of a communication system, according to which a window mechanism is used to influence the number of messages which a message source may send without acknowledgement, with
- the number of messages which are received per message channel being determined in the receiving device,
- a window size being defined for each message channel as soon as the number of messages received per message channel exceeds a specific value,
**characterised in that** for each message channel
- the sequence number of the next message is stored at the start of a control cycle,
- the sequence numbers of subsequent messages are monitored,
- the difference between the current sequence number and the sequence number stored at the start of the control cycle is compared with the window size and
- a new window size is set, if the difference between the current sequence number and the sequence number stored at the start of the control cycle reaches or exceeds the current window size multiplied by a parameter.

2. Method according to claim 1, **characterised in that** the parameter is selected based on external influences which do not relate directly to the current window size.

3. Method according to claim 1, **characterised in that** for each message channel
- overload identification is carried out,
- in an overload situation the new window size is selected as smaller than the current window size using a suitable method,
- if no overload exists, the new window size is selected as larger than the current window size using a suitable method.

4. Method according to claim 3, **characterised in that** for each message channel
- in order to reduce the window, the new window size is determined from the number of messages passed on in the overload situation from the one receiving component to an upstream processing component,
- the window is enlarged by enlarging the current window by a specific percentage.

5. Method according to one of claims 1 to 4, **characterised in that** the control cycles are started at randomly selected times.

6. Arrangement for flow control for a plurality of transmitters having unknown and/or different transmission power, which is part of the receiving device of a communication system, which uses a window mechanism to influence the number of messages which a message source may send without acknowledgement, with the receiving device being set up
- to determine the number of messages which are received per message channel,
- to determine a window size for each message channel as soon as the number of messages received per message channel exceeds a specific value,
**characterised in that** the arrangement is set up, for each message channel,
- to store the sequence number of the next message at the start of a control cycle,
- to monitor the sequence numbers of subsequent messages,
- to compare the difference between the current sequence number and the sequence number stored at the start of the control cycle with the window size and
- to set a new window size, if the difference between the current sequence number and the sequence number stored at the start of the control cycle reaches or exceeds the current window size multiplied by a parameter.

7. Arrangement according to claim 6, **characterised in that** the arrangement is set up to select the parameter based on external influences which do not relate directly to the current window size.

8. Arrangement according to claim 6, **characterised in that** the arrangement is set up, for each message channel,
- to carry out overload identification,
- in an overload situation, to select the new window size as smaller than the current window size using a suitable method,
- if no overload exists, to select the new window size as larger than the current window size using a suitable method.

9. Arrangement according to claim 8, **characterised in that** the arrangement is set up, for each message channel
- in order to reduce the size of the window, to determine the new window size from the number of messages passed on in the overload situation from the one receiving component to an upstream processing component,
- to enlarge the window by enlarging the current window by a specific percentage.

10. Arrangement according to one of claims 6 to 9,
**characterised in that** the arrangement is set up to start the control cycles at randomly selected times.

## Revendications

1. Procédé pour le contrôle de flux dans le cas de plusieurs émetteurs avec puissance d'émission inconnue et/ou différente, qui se déroule dans le dispositif de réception d'un système de communication, selon lequel un mécanisme de fenêtre destiné à influencer le nombre des informations qu'une source d'informations peut envoyer sans acquittement, est utilisé, dans lequel
- le nombre des informations reçues par canal d'informations est déterminé dans le dispositif de réception,
- une grandeur de fenêtre est déterminée par canal d'informations dès que le nombre des informations reçues par canal d'informations dépasse une valeur définie,
**caractérisé en ce que**, pour chaque canal d'informations, le numéro de séquence de l'information suivante est stocké au début d'un cycle de réglage, les numéros de séquence des informations suivantes sont surveillés
- la différence résultant du numéro de séquence actuel et du numéro de séquence stocké au début du cycle de réglage est comparée avec la grandeur de fenêtre et
- une nouvelle grandeur de fenêtre est mise en place lorsque la différence résultant du numéro de séquence actuel et du numéro de séquence stocké au début du cycle de réglage atteint ou dépasse la grandeur de fenêtre actuelle multipliée par un paramètre.

2. Procédé selon la revendication 1, **caractérisé en ce que** le paramètre est choisi sur la base d'influences extérieures qui ne sont pas en rapport direct avec la grandeur de fenêtre actuelle.

3. Procédé selon la revendication 1, **caractérisé en ce que**, pour chaque canal d'informations,
- une reconnaissance de surcharge est effectuée,
- en cas de surcharge, la nouvelle grandeur de fenêtre est choisie inférieure à la grandeur de fenêtre actuelle par un procédé approprié,
- si l'on n'a pas de surcharge, la nouvelle grandeur de fenêtre est choisie supérieure à la grandeur de fenêtre actuelle par un procédé approprié.

4. Procédé selon la revendication 3, **caractérisé en ce que**, pour chaque canal d'informations,
- pour la réduction de la fenêtre, la nouvelle grandeur de fenêtre est déterminée à partir du nombre des informations transmises en cas de surcharge d'un composant de réception à un composant de prétraitement,
- l'agrandissement de la fenêtre s'effectue par l'agrandissement de la fenêtre actuelle d'un certain pourcentage.

5. Procédé selon l'une quelconque des revendications 1 à 4, **caractérisé en ce que** les cycles de réglage sont démarrés à des moments choisis de façon aléatoire.

6. Agencement pour le contrôle de flux en cas de plusieurs émetteurs avec puissance d'émission inconnue et/ou différente, qui fait partie du système de réception d'un système de communication, lequel utilise un mécanisme de fenêtre pour influencer le nombre des informations qu'une source d'informations peut envoyer sans acquittement, le dispositif de réception étant aménagé pour
- déterminer le nombre des informations reçues par canal d'informations,
- déterminer une grandeur de fenêtre par canal d'informations dès que le nombre des informations reçues par canal d'informations dépasse une valeur définie,
**caractérisé en ce que** l'agencement est aménagé, pour chaque canal d'informations,
- pour stocker le numéro de séquence de l'information immédiatement consécutive au début d'un cycle de réglage,
- pour contrôler les numéros de séquence des informations suivantes,
- pour comparer la différence résultant du numéro de séquence actuel et du numéro de séquence stocké au début du cycle de réglage avec la grandeur de fenêtre et
- pour mettre en place une nouvelle grandeur de fenêtre dans le cas où la différence résultant du numéro de séquence actuel et du numéro de séquence stocké au début du cycle de réglage atteint ou dépasse la grandeur de fenêtre actuelle multipliée par un paramètre.

7. Agencement selon la revendication 6, **caractérisé en ce que** l'agencement est aménagé pour choisir le paramètre sur la base d'influences extérieures qui ne sont pas en rapport direct avec la grandeur de fenêtre actuelle.

8. Agencement selon la revendication 6, **caractérisé en ce que** l'agencement est aménagé, pour chaque canal d'informations,
- pour effectuer une reconnaissance de surcharge
- pour choisir en cas de surcharge la nouvelle grandeur de fenêtre inférieure à la grandeur de fenêtre actuelle par un procédé approprié
- pour choisir la nouvelle grandeur de fenêtre supérieure à la grandeur de fenêtre actuelle par un procédé approprié si l'on n'a pas de surcharge.

9. Agencement selon la revendication 8, **caractérisé en ce que** l'agencement est aménagé, pour chaque canal d'informations,
- pour déterminer la nouvelle grandeur de fenêtre à partir du nombre des informations transmises d'un composant de réception à un composant de prétraitement en cas de surcharge pour la réduction de la fenêtre,
- pour effectuer l'agrandissement de la fenêtre par l'agrandissement de la fenêtre actuelle d'un certain pourcentage.

10. Agencement selon l'une quelconque des revendications 6 à 9, **caractérisé en ce que** l'agencement est aménagé pour démarrer les cycles de réglage à des moments choisis de façon aléatoire.
